# FASCICULE DE BREVET EUROPEEN

(11) **EP 0 892 898 B1**
(45) Date de publication et mention de la délivrance du brevet: **12.12.2001**
(21) Numéro de dépôt: 98904237.9
(22) Date de dépôt: 28.01.1998
(51) Int. Cl.: F16F 15/123, F16F 15/129

(54) **DISPOSITIF AMORTISSEUR DE TORSION, EN PARTICULIER FRICTION D'EMBRAYAGE, NOTAMMENT POUR VEHICULE AUTOMOBILE**
TORSIONSDÄMFUNGSVORRICHTUNG, INSBESONDERE KUPPLUNGSSCHEIBE FÜR KRAFTFAHRZEUGE
TORQUE DAMPING DEVICE, IN PARTICULAR CLUTCH FRICTION, PARTICULARLY FOR MOTOR VEHICLES

(30) Priorité: 28.01.1997 FR 9700875
(43) Date de publication de la demande: 27.01.1999
(73) Titulaire: VALEO, 75017 Paris (FR)
(72) Inventeur: LEBAS, Gilles, F-92600 Asnières (FR); TAUVRON, Fabrice, F-91200 Athis-Mons (FR)
(74) Mandataire: Gamonal, Didier
(86) Numéro de dépôt international: FR9800153
(87) Numéro de publication internationale: WO9832991

(56) Documents cités:
- EP-A- 0 732 527
- DE-A- 19 614 002
- FR-A- 2 609 771
- FR-A- 2 736 698
- GB-A- 561 107

## Description

L'invention concerne les dispositifs amortisseurs de torsion du genre comportant au moins deux parties coaxiales montées rotatives l'une par rapport à l'autre, dans les limites d'un débattement angulaire déterminé et à l'encontre d'organes élastiques à action circonférentielle, l'une de ces parties coaxiales comportant un voile de moyeu tandis que l'autre comporte un voile de support solidaire de deux rondelles de guidage qui encadrent le voile de moyeu, à distance de celui-ci, les organes élastiques étant chacun logés, pour partie, dans des logements ménagés dans le voile de moyeu, et, pour partie, dans des logements ménagés en correspondance dans les rondelles de guidage.

Il s'agit, par exemple, d'une friction d'embrayage pour véhicule automobile.

Dans un tel cas, un disque de friction, formé d'un voile de support porteur de garnitures de frottement à sa périphérie, se trouve solidarisé par son voile de support à l'une des rondelles de guidage.

En pratique, des moyens de frottement à action axiale sont prévus.

Ces moyens comportent classiquement une rondelle élastique à action axiale prenant appui sur une rondelle de guidage et sur une rondelle d'application liée en rotation à cette même rondelle de guidage, pour serrer une rondelle de frottement entre le voile de moyeu et l'autre rondelle de guidage.

Ainsi, il est prévu un grand nombre de pièces.

La présente invention a pour objet de diminuer, de manière simple et économique, le nombre de pièces.

Suivant l'invention, un dispositif amortisseur de torsion du type sus-indiqué est caractérisé en ce que l'une des rondelles de guidage, dite deuxième rondelle de guidage, présente des emboutis, éventuellement reliés ensembles de manière continue, dirigés vers le voile de moyeu et en ce que le voile de support, d'une part, est implanté de l'autre côté du voile de moyeu par rapport à la deuxième rondelle de guidage et, d'autre part, présente, en regard des emboutis, des pattes élastiquement déformables axialement agissant sur le voile de moyeu pour solliciter les emboutis en direction du voile de moyeu.

Grâce à l'invention, on réduit le nombre de pièce puisque la rondelle élastique à action axiale de l'art antérieur est remplacée par le voile de support et la deuxième rondelle de guidage est plus rigide.

Dans une forme de réalisation, une rondelle à coefficient de frottement déterminé, peut être intercalée axialement entre le voile de moyeu et le voile de support et/ou entre le voile de moyeu et les emboutis de la deuxième rondelle de guidage pour éviter un frottement métal sur métal.

La rondelle peut être solidaire de l'un des élément voile du moyeu, emboutis, voile de support ou être montée libre.

Elle peut être remplacée par un revêtement déposé sur l'un des éléments voile de moyeu, voile de support, emboutis.

Dans une forme de réalisation, le voile de support et/ou les emboutis, portent directement sur le voile de moyeu pour réduction encore du nombre de pièces.

De préférence, les pattes élastiquement déformables axialement sont obtenues par découpe et cambrage.

En jouant sur la forme des découpes et le cambrage, on peut obtenir différentes raideur pour les pattes, qui peuvent porter directement sur le voile de moyeu ou être solidaires à leur périphérie interne d'un anneau portant sur le voile de moyeu.

On peut, grâce aux découpes et au cambrage, obtenir une raideur qui permet de s'affranchir des tolérance de fabrication.

Le voile de support peut porter des garnitures de friction ou être relié directement à un volant d'entraînement solidaire en rotation d'un premier arbre tel qu'un arbre menant, tandis que le moyeu est solidaire en rotation d'un deuxième arbre, tel qu'un arbre mené.

Dans le premier cas, les garnitures de friction sont destinée à être reliées de manière débrayable au volant d'entraînement. Les logements des rondelles de guidage peuvent être de toute forme appropriée, et consister en des fenêtres.

Le voile de support peut être solidaire d'une troisième rondelle de guidage ou former par lui-même une première rondelle de guidage, avec, pour chacune des fenêtres des rondelles de guidage, pour un maintien satisfaisant des organes élastiques, au moins deux rebords, communément dits oeillères, qui font saillie du côté opposé au voile de moyeu, à savoir, un rebord supérieur, qui s'étend le long du bord circonférentiel radialement le plus externe d'une telle fenêtre, et un rebord inférieur, qui s'étend le long de son bord circonférentiel radialement le plus interne.

A leurs extrémités circonférentielles, les organes élastiques portent usuellement sur la tranche de ces rondelles de guidage.

Pour que celles-ci soient en mesure de résister convenablement à la pression spécifique qui en résulte, il est usuel de leur conférer une épaisseur non négligeable, en général au moins égale à 1,5 mm, et de les traiter en conséquence.

On réduit les coûts lorsque l'on supprime l'une de ces rondelles de guidage et que l'on intègre les fonctions de voile de support du disque de friction.

Mais, pour satisfaire à ses propres fonctions, qui nécessitent une certaine élasticité, ce voile de support est notablement plus mince qu'une rondelle de guidage, son épaisseur étant en général inférieure à 1 mm.

Il n'est donc pas normalement envisageable que les organes élastiques puissent porter sur la tranche de ce voile de support.

Pour surmonter cette difficulté, il a été proposé de prévoir également des rebords, dits ici rebords latéraux, le long des bords radiaux des fenêtres d'un tel voile de support, aux extrémités circonférentielles de ces fenêtres, pour que l'appui des organes élastiques se fasse non plus sur la tranche d'un tel voile de support mais sur une partie de flan de celui-ci.

Mais, à l'expérience, il s'avère que, sous les effets de la pression spécifique à laquelle ils sont soumis, ces rebords latéraux sont intempestivement susceptibles de fléchir, au détriment de l'appui qu'ils fournissent aux organes élastiques.

Pour augmenter la résistance à la flexion de ces rebords latéraux, ce dispositif amortisseur de torsion, qui est du genre précèdemment exposé, et dans lequel l'une des rondelles de guidage, dite première rondelle de guidage, formant le voile de support précité, est plus mince que l'autre, dite seconde rondelle de guidage, avec, pour chacune des fenêtres de celle au moins de la première rondelle de guidage, d'un seul tenant avec celle-ci, divers rebords qui font saillie du côté opposé au voile de moyeu, à savoir, un rebord supérieur, un rebord inférieur, et deux rebords latéraux, est d'une manière générale caractérisé en ce que ces divers rebords sont reliés d'un seul tenant en continu les uns avec les autres tout en s'étendant coujointement en bordure d'une ouverture qui laisse dégagée une partie au moins de la fenêtre concernée, et en ce que les rebords latéraux s'étendent perpendiculairement au plan général de la première rondelle de guidage.

Ainsi, les rebords latéraux d'une fenêtre se trouvent en quelque sorte mecaniquement attelés aux rebords supérieur et inférieur de celle-ci, ce qui, comme recherché, en renforce avantageusement la résistance à la flexion. En outre les rebords latéraux offrent un bon appui aux organes élastiques.

Certes, il est déjà connu de disposer les organes élastiques dans des logements emboutis en demi-cylindre dans les rondelles de guidage.

Mais, se rejoignant l'un l'autre, les rebords supérieur et inférieur correspondants forment latéralement une épaisseur au droit des organes élastiques, au détriment de l'encombrement axial de l'ensemble à ce niveau.

Il n'y a rien de tel dans le dispositif amortisseur de torsion suivant cet exemple de réalisation, le rebord supérieur et le rebord inférieur d'une fenêtre restant à distance l'un de l'autre, de part et d'autre de l'ouverture en bordure de laquelle ils s'étendent.

En outre, la première rondelle de guidage la plus mince étant, rigidifiée au niveau de ses fenêtres, il est avantageusement possible, de manière précitée, d'en tirer des pattes élastiquement déformables dont la zone d'enracinement s'étend entre deux de ces fenêtres, et qui soumettent l'ensemble à une sollicitation de serrage axial.

Cela réduit encore le nombre de pièces necessaires à la réalisation de l'ensemble, en permettant de faire l'économie d'une rondelle élastique.

Corollairement, la seconde rondelle de guidage peut, de manière précitée, elle-même présenter des emboutis, qui, disposés en vis-a-vis des pattes élastiquement deformables précédentes, peuvent venir frotter contre le voile de moyeu.

Tout en rigidifiant cette rondelle de guidage, ces emboutis permettent avantageusement de faire en plus l'économie d'une rondelle de frottement, et, donc, de réduire encore le nombre de pièces nécessaires. Ainsi les deux rondelles de guidage n'ont pas la même fonction. La première rondelle de guidage est élastique et la deuxième rondelle de guidage rigide.

Enfin, cette deuxième rondelle de guidage peut présenter, dans tous les cas, à sa périphérie interne une portée tronconique par laquelle elle coopère avec une portée tronconique complémentaire prévue à cet effet à la périphérie externe de ce moyeu.

Cela permet de faire avantageusement l'économie du palier usuellement prévu à ce niveau.

Avantageusement, une partie au moins de l'un des rebords latéraux appartient à un embouti dont le fond fait saillie vers le voile de moyeu.

Cela permet de rigidifier encore la première rondelle de guidage.

Les caractéristiques et avantages de l'invention ressortiront d'ailleurs de la description qui va suivre, à titre d'exemple, en référence aux dessins schématiques annexes sur lesquels :
la figure 1 est une vue partielle, en élévation, d'un dispositif amortisseur de torsion suivant l'invention, suivant la flèche I de la figure 2 ;
la figure 2 en est une vue en coupe axiale, suivant la ligne brisee II-II de la figure 1 ;
la figure 3 en est, supposée développée à plat, une vue partielle en coupe circonférentielle, suivant la ligne III-III de la figure 1 ;
la figure 4 est, à échelle supérieure, et suivant la flèche IV de la figure 3, une vue partielle en perspective d'une des rondelles de guidage que comporte le dispositif amortisseur de torsion, vue du côté de sa surface interne ;
la figure 5 est une vue partielle en perspective analogue à celle de la figure 4, pour une variante de réalisation.
La figure 6 est une vue analogue à la figure 1 pour un autre exemple de réalisation ;
La figure 7 est une vue de face partielle du voile de support de la figure 6 ;
La figure 8 est une vue en coupe du voile de support selon la ligne 8,8 de la figure 7 ;
La figure 9 représente la courbe caractéristique du voile du support de la figure 7.

Dans toutes les figures, les éléments communs seront affectés du même signe de référence.

Ces figures illustrent, à titre d'exemple, l'application de l'invention au cas où le dispositif amortisseur de torsion 10 suivant l'invention constitue une friction d'embrayage pour vehicule automobile.

Ce dispositif amortisseur de torsion comporte au moins deux parties coaxiales 10A, 10B montées rotatives l'une par rapport à l'autre dans les limites d'un débattement angulaire déterminé, et à l'encontre d'organes élastiques 11 à action circonférentielle.

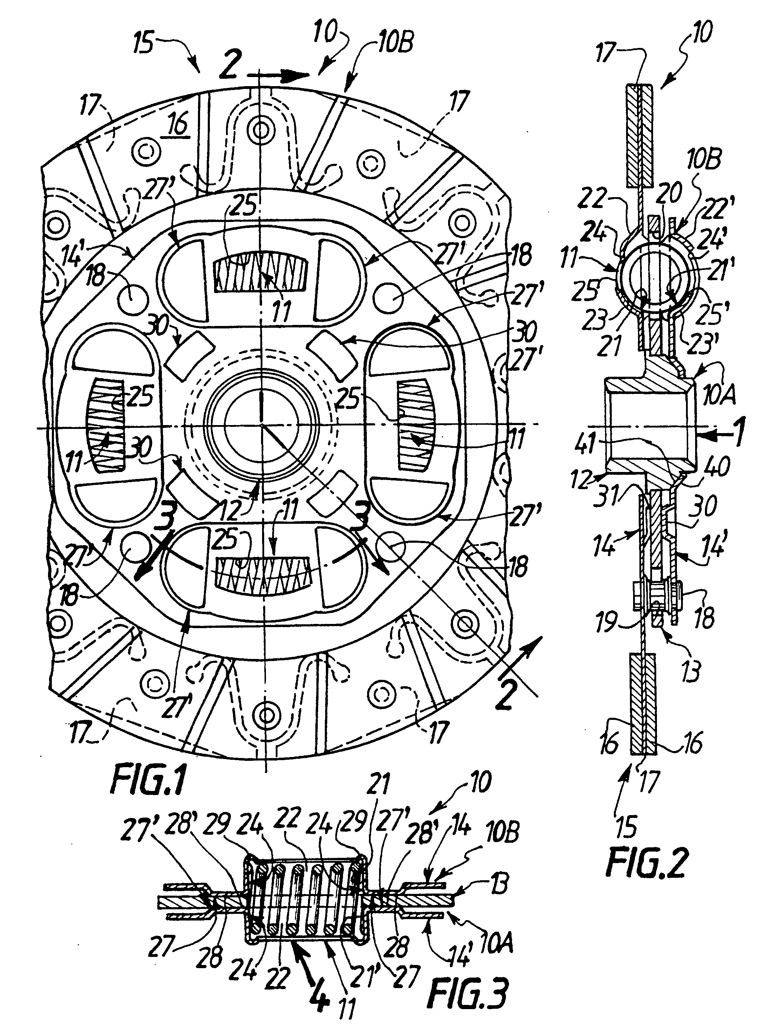

Dans les figures 1 à 5, seules deux parties coaxiales 10A, 10B sont prévues.

L'une de ces parties coaxiales 10A, 10B, ici la partie coaxiale 10A, comporte, d'une part, un moyeu 12, qui est destiné à être solidarisé en rotation à un premier arbre, en l'espèce un arbre mené, et, d'autre part, un voile de moyeu 13 solidaire du moyeu 12.

L'autre des parties coaxiales 10A, 10B, ici la partie coaxiale 10B, comporte deux rondelles de guidage 14, 14', qui encadrent le voile de moyeu 13 à distance de celui-ci. Les rondelles de guidage 14, 14' sont ici métalliques.

S'agissant, ici, d'une friction d'embrayage, la rondelle de guidage 14 forme, dans les figures 1 à 5,par elle-même le voile de support d'un disque de friction 15, en portant, à sa périphérie externe, et de part et d'autre, pour sa solidarisation en rotation par frottement à un deuxième arbre, ici un arbre menant, des garnitures de frottement 16.

Cette rondelle de guidage 14, dite première rondelle de guidage, est donc sensiblement plus mince que l'autre rondelle de guidage 14', dite seconde rondelle de guidage.

Ici, les garnitures de frottement 16 sont fixées par rivetage et collage à la première rondelle de guidage 14, et, pour leur support, celle-ci est fractionnée en pales et languettes 17 à sa périphérie externe, grâce à des fentes visibles à la figure 1. La première rondelle de guidage 14 est traitée notamment thermiquement pour conférer aux pales l'élasticité voulue. Ces pales sont élastiquement déformables axialement.

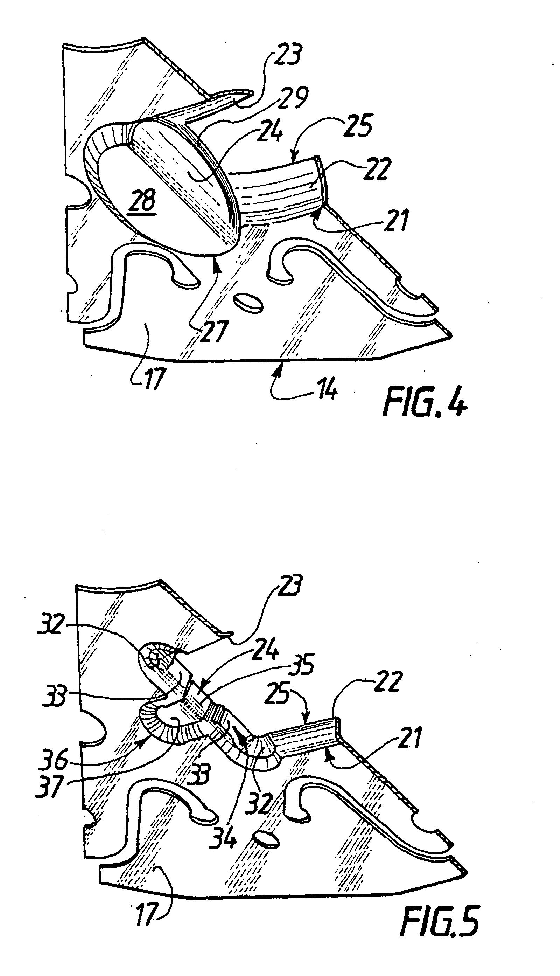

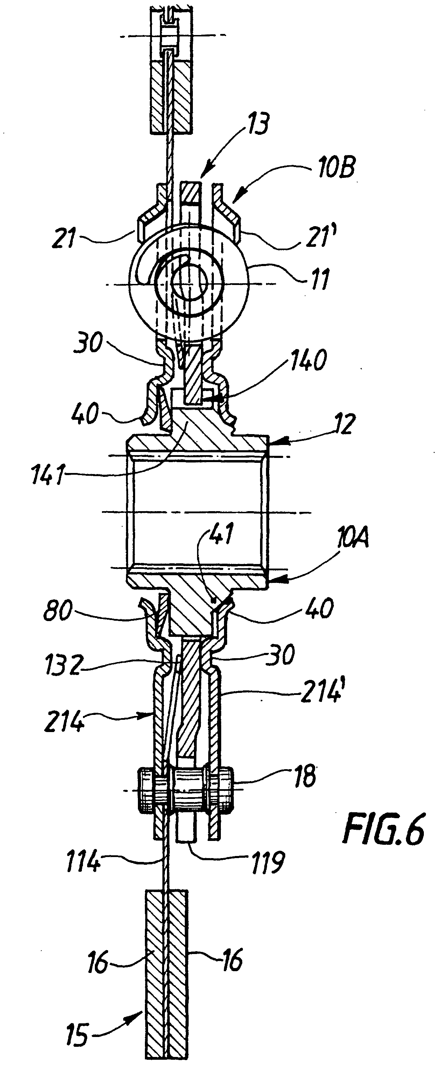

Par mesure de simplicité, les garnitures de frottement 16 ont été éliminées sur les figures 4 et 5.

Ici, les rondelles de guidage 14, 14' sont solidarisées l'une à l'autre par des entretoises 18, qui, prévues circulairement de place en place, traversent avec jeu des évidements 19 ménagés à cet effet dans le voile de moyeu 13, et qui, avec les extrémités circonférentielles de ces évidements 19, délimitent le débattement angulaire possible entre les deux parties coaxiales 10A, 10B.

Ici, les organes élastiques 11 sont des ressorts hélicoïdaux, et ils sont tous disposés sensiblement tangentiellement à une même circonférence de l'ensemble.

Ces organes élastiques 11 sont chacun logés, pour partie, dans des fenêtres 20 ménagées dans le voile de moyeu 13, et, pour partie, dans des fenêtres 21, 21' ménagées en correspondance dans les rondelles de guidage 14, 14'.

Pour chacune des fenêtres 21 de celle au moins des rondelles de guidage 14, 14', qui est la plus mince, ici la première rondelle de guidage 14, il est prévu, d'un seul tenant avec celle-ci, divers rebords qui font saillie du côté opposé au voile de moyeu 13, à savoir, un rebord supérieur 22, qui s'étend le long du bord circonférentiel radialement le plus externe d'une telle fenêtre 21, un rebord inférieur 23, qui s'étend le long de son bord circonférentiel radialement le plus interne, et deux rebords latéraux 24, qui s'étendent chacun respectivement à ses extrémités circonférentielles, le long de ses deux bords radiaux.

Les rebords latéraux 24 fournissent un appui à l'organe élastique 11 concerné, l'un dans un sens circonférentiel, l'autre dans le sens circonférentiel opposé au précèdent.

Suivant une caractéristique de l'invention, les divers rebords 22, 23, 24 sont reliés d'un seul tenant en continu les uns avec les autres tout en s'étendant conjointement en bordure d'une ouverture 25, qui laisse dégagée une partie au moins de la fenêtre 21 concernée.

Sur les figures 1 à 4, une partie, au moins, de l'un au moins des rebords latéraux 24 appartient à un embouti 27 dont le fond 28 fait saillie vers le voile de moyeu 13. Cette disposition permet d'augmenter la hauteur des bords latéraux 24.

Ici, l'un et l'autre des rebords latéraux 24 appartiennent en totalité à un tel embouti 27, et cet embouti 27 qui est borgne, a, en plan, un contour hémicirculaire pour réduction de l'encombrement.

Ici, les divers rebords 22, 23, 24 ont tous sensiblement la même hauteur par rapport au plan général de la rondelle de guidage 14.

Le rebord supérieur 22 et le rebord inférieur 23 sont légèrement cintrés, au profil des organes élastiques 11.

Les rebords latéraux 24, qui fournissent un appui à ces organes élastiques 11, sont, au contraire, plats, et ils s'étendent sensiblement perpendiculairement au plan général de la rondelle de guidage 14 pour un bon appui des ressorts 11.

Ici, pour parfaire le maintien des organes élastiques 11, l'un au moins des rebords latéraux 24, et, en pratique, chacun de ceux-ci, présente un retour en forme de crosse 29 le long de son bord libre. Ces retours 29 forment des dégagements pour les ressorts hélicoïdaux 11 et réduisent les risquent de coincement au niveau des extrémités des ressorts 11.

Ici, la seconde rondelle de guidage 14', qui est la rondelle de guidage la plus épaisse, comporte des rebords 22', 23', 24' de même type que ceux 22, 23, 24 de la rondelle de guidage 14 la plus mince.

Elle comporte donc aussi des emboutis 27' dont le fond 28' fait saillie vers le voile de moyeu 13 et des bords latéraux plats.

Ici, des pattes élastiquement déformables 31 venues d'un seul tenant de la rondelle de guidage 14 la plus mince, par découpe et pliage ou cambrage de celle-ci, portent élastiquement sur le voile de moyeu 13 et soumettent ainsi, suivant l'invention, l'ensemble à une sollicitation de serrage axial.

Les pattes 31 présentent un tronçon incliné prolongé par une extrémité transversale de contact avec le voile de moyeu 13. Le tronçon incliné peut être de largeur constante ou variable, par exemple, trapézoïdal.

Corollairement, la seconde rondelle de guidage 14' présente, en vis-à-vis de ces pattes élastiquement déformables 31, des emboutis 30, qui portent sur le voile de moyeu 13.

Il est ainsi assuré, localement, un contact de frottement métal/métal entre la seconde rondelle de guidage 14' et le voile de moyeu 13, pour l'amortissement des oscillations entre les deux parties coaxiales 10A, 10B.

L'ensemble permet avantageusement de faire l'économie d'au moins une rondelle élastique et d'au moins une rondelle de frottement. Le nombre de pièces est ainsi réduit. Le stockage des pièces est plus simple. En outre les risques d'erreurs dans le choix des pièces sont diminués.

Si désiré, le fond 28' des emboutis 27' peut être dans le plan de celui des emboutis 30, pour renforcer le frottement correspondant. D'une manière générale, la rondelle de guidage 14' est très robuste grâce aux emboutis 27', 28', les emboutis 30 étant placés radialement en dessous des emboutis 27'. Deux emboutis 27' sont disposés de part et d'autre d'un embouti 30.

Ici, la zone d'enracinement de chacune des pattes élastiquement déformables 31 se situe entre deux fenêtres 21 de la première rondelle de guidage 14, et les emboutis 30 de la seconde rondelle de guidage 14' se situent, eux, radialement entre les fenêtres 21' de cette rondelle de guidage 14' et l'axe de l'ensemble.

Ici, la seconde rondelle de guidage 14' présente en outre à sa périphérie interne une portée tronconique 40 par laquelle elle coopère de manière complémentaire avec une portée tronconique 41 que présente à sa périphérie externe le moyeu 12.

Cette disposition permet de faire l'économie du palier usuellement prévu à cet endroit, et donc de réduire encore le nombre de pièces nécessaires à la réalisation de l'ensemble.

Ici, la portée tronconique 41 du moyeu 12 est réalisée à la faveur d'une surépaisseur, formant bride, que présente celui-ci à sa périphérie externe, et c'est également à la faveur de cette surépaisseur qu'est réalisé l'assemblage, ici par sertissage, du voile de moyeu 13. La seconde rondelle de guidage 14' est très stable du fait de sa portée tronconique 40 et de ses emboutis 30.

Sur la figure 5, les divers rebords 22, 23, 24 sont reliés les uns avec les autres par des rebords d'angle 32, qui sont globalement arrondis, et qui, de même hauteur que les précédents, entourent chacun un épanouissement local, en forme de lobe, de la fenêtre 21 concernée.

Ici, l'un au moins des rebords latéraux 24 comporte trois pans, à savoir, deux pans d'extrémité 33, qui sont sensiblement coplanaires, et qui fournissent un appui à l'organe élastique 11 concerné, et un pan médian 35, qui est en retrait par rapport aux pans d'extrémité 33, en étant plus éloigné que ceux-ci du rebord latéral 24 opposé, et qui, à la manière d'une nervure, contribue avantageusement au raidissement de l'ensemble.

Ici, ce pan médian 35 appartient à un embouti 36 qui s'écarte du voile de moyeu 13 et dont le fond 37 est donc à distance de celui-ci. L'embouti fait saillie vers le voile de moyeu 13. Les rebords latéraux 24 s'étendent ainsi perpendiculairement au plan général de la première rondelle de guidage.

Bien entendu, la présente invention ne se limite pas aux formes de réalisation décrites et représentées, mais englobe toute variante d'exécution.

En particulier, les fenêtres 21, 21' des deux rondelles de guidage 14, 14' peuvent avoir des rebords non identiques du fait que la première rondelle de guidage 14 est plus mince et donc plus facilement déformable.

Bien entendu, des moyens d'engrènement à jeu (figure 6) peuvent intervenir entre la périphérie interne du voile de moyeu et la périphérie externe du moyeu, comme décrit par exemple dans le document FR-A-2 270 491.

Dans ce cas, le voile de moyeu est mobile par rapport au moyeu dans les limites d'un secteur de débattement angulaire déterminé par un jeu circonférentiel entre la denture du voile de moyeu et celle du moyeu.

Ces dentures sont localement interrompues pour le logement d'organes élastiques de faible raideur, le voile de moyeu et le moyeu présentant pour ce faire des échancrures en vis-à-vis, comme visible sur les figures 3 et 4 du document FR-A-2 270 491 mentionné.

Ainsi, à la figure 6, on voit en 140 les moyens d'engrènement à jeu précités, sachant que la denture du voile 13 est plus courte axialement que la denture du moyeu 12.

Dans cette figure, les colonnettes 18 traversent les évidements en formes d'échancrures 119 ouvertes vers l'extérieur et ménagés dans le voile du moyeu 13. Ces échancrures 119 remplacent les évidements 19 de forme fermée de la figure 2.

Les colonnettes 18 servent à fixer le voile de support 114 du disque de friction 15 à une troisième rondelle de guidage 214, ici identique à la deuxième rondelle de guidage 214' présentant à sa périphérie interne une portée tronconique 40, par laquelle elle coopère de manière complémentaire avec une portée tronconique 41, que présente à sa périphérie externe le moyeu 12. La deuxième rondelle de guidage 214' présente des emboutis 30 radialement en dessous de ses fenêtres 21' de logement des organes élastiques 11 en forme de ressorts hélicoïdaux.

Le voile de support 114, plus mince que les rondelles de guidage 214, 214', présente d'un seul tenant à sa périphérie interne, par découpe et pliage, ou cambrage, des pattes 131 élastiquement déformables axialement.

Ici, les pattes 131 sont solidaires à leur périphérie interne d'un anneau 132, qui porte ainsi élastiquement contre le voile de moyeu 13. Ces pattes 131 portent donc indirectement sur le voile de moyeu 13 et soumettent ainsi l'ensemble à une sollicitation de serrage axial. Comme dans les figures 1 à 4, les pattes élastiques 131 sollicitent les emboutis 30 au contact du voile de moyeu 13.

A la figure 6, le voile de support 114 est distinct de la troisième rondelle de guidage 214 en étant accolé à celle-ci à sa périphérie externe.

Plus précisément, le voile 114 est au niveau des colonnettes 18 en contact avec la face interne de la troisième rondelle de guidage 214 tournée vers le voile 114 de moyeu 13. Les colonnettes 18 fixent donc le voile aux rondelles 214, 214'.

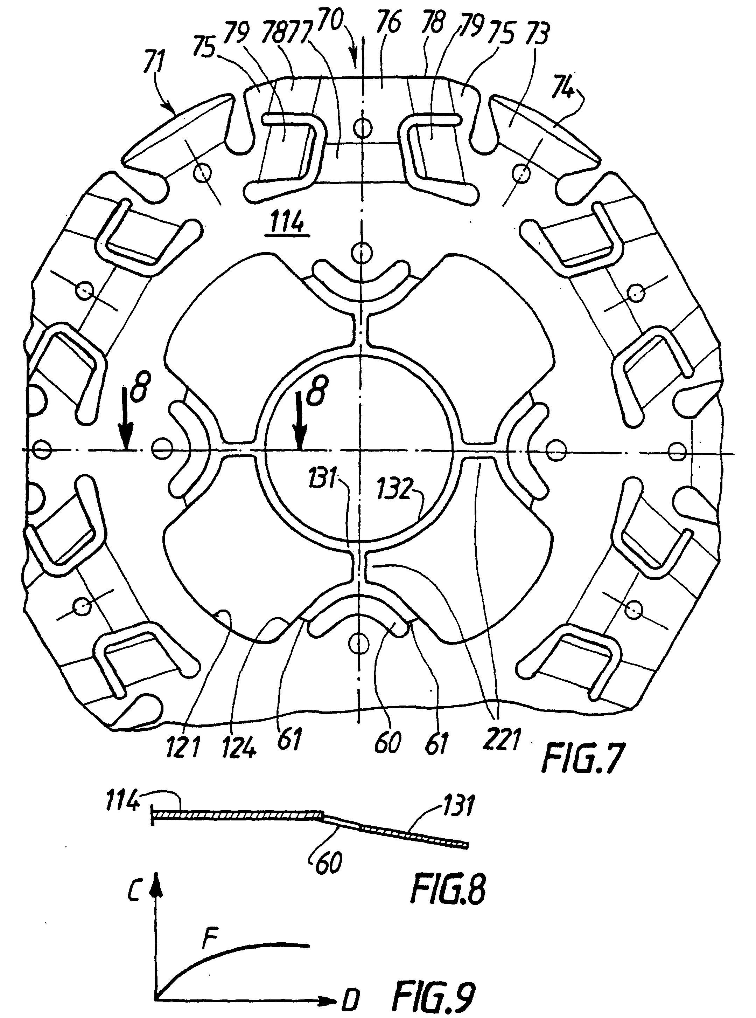

Ce voile 114 présente une partie centrale (figure 7 et 8) élastique et cambrée.

Cette partie centrale comporte les pattes 131, l'anneau 132 et une partie des fenêtres 121 que présente le voile 114 pour passage à jeu des ressorts 11. Ces fenêtres 121 sont dépourvues de rebords et ne servent pas au logement des ressorts 11.

Les pattes 131 sont délimitées extérieurement chacune, d'une part, par une ouverture 60 en forme de croissant s'étendant en dessous d'un trou de passage 61 d'une colonnette 18, et, d'autre part, par la ligne de cambrage 62 de la partie centrale du support.

Cette ligne 62 comporte deux tronçons de part et d'autre d'une ouverture 60.

Les tronçons s'étendent de l'ouverture 60 au bord latéral 124 d'une fenêtre 121, délimitée intérieurement par l'anneau 132.

Les pattes 131 s'étendent radialement entre deux fenêtres consécutives 121 et sont délimitées latéralement par ces fenêtres consécutives. Intérieurement, les pattes 131 se raccordent à l'anneau 132. On notera que les coins inférieurs 221 des fenêtres ont été élargis, dans le sens circonférentiel, en sorte que les pattes ont la forme d'une mince bande de matière radiale entre les coins 221, et s'épanouissent radialement au delà des coins pour présenter deux portions courbes épousant la forme de l'ouverture 60.

Ainsi qu'on l'aura compris, il est réalisé dans le voile de support 114, différentes découpes 60, 121, 221, et un cambrage (ou pliage).

On peut modifier la raideur des pattes élastiques axialement 131 en modifiant la forme des découpes, notamment la forme des ouvertures 60 et des coins 221, et/ou l'angle de cambrage. On peut supprimer ainsi les coins 221.

Il en est de même dans le mode de réalisation des figure 1 à 5.

D'une manière générale, grâce au cambrage, la périphérie interne des pattes 31, 131, est décalée axialement par rapport à la périphérie externe des dites pattes et les fenêtres 121 sont inclinées à leur périphérie interne.

Le voile 114 comporte une partie périphérique comportant des pales 70 de type tripode. Ces pales 70 alternent circonférentiellement avec une série de languettes radiales 71 comme décrit dans le document FR-A-2 702 811.

Pour plus de précisions, on se rapportera à ce document ou à son correspondant US-A-5 452 783 montrant également les moyens d'engrènement à jeu et les organes élastiques de faible raideur intervenant entre le voile de moyeu 13 et le moyeu 12.

Ainsi les pales 70 présentent à la faveur de plis 77, 78 une zone centrale de portée 76 et deux zones périphériques 75 de portées de part et d'autre de la zone centrale de portée. Les languettes 71 présentent à leur extrémité libre à la faveur d'un pli de raccordement tangentiel 73, c'est-à-dire perpendiculaire à l'axe de symétrie radiale de la languette 71, une zone de portée supplémentaire 74.

Suivant une caractéristique les zones périphériques 75 sont raccordées à la partie interne des languettes 71, c'est-à-dire chacune à la partie de la languette 71 située radialement en dessous du pli 73 et dans le plan du voile 114. On augmente ainsi encore les surfaces de portée qu'offre le voile 114 aux garnitures de friction 16 fixées ici par rivetage respectivement aux languettes 71 et aux pales 70. En variante, la fixation est réalisée par collage. Les pales sont plus solides et moins sensibles à la force centrifuge.

La zone 74 est décalée axialement en direction de la zone centrale de portée 76 d'une pale 70, elle même décalée axialement à la faveur d'un pli tangentiel 77 par rapport à la languette 71.

Des plis obliques 78 séparent les zones 75 de la zone 76. Les plis 78 sont inclinés par rapport à l'axe de symétrie radiale d'une pale perpendiculaire au pli 77. Des pattes 79 sont disposées de part et d'autre du pli 77.

Les pattes 79 sont affectés par les plis 78 et ont une zone d'enracinement dans le plan d'une zone périphérique 75, ici dans le plan des languettes 71 et du voile 114. Le bout des pattes 79 est dans le plan des zones centrales 76.

On notera qu'une rondelle élastique à action axiale 80 est interposée axialement entre le moyeu 12 et la périphérie interne de la rondelle de guidage 214. La rondelle 80 sollicite axialement la partie tronconique 40 de la rondelle de guidage 214', au contact de la portée tronconique 41 du moyeu 12.

Le rondelle 80 exerce une action axiale plus faible que les languettes 131 et est liée en rotation, par exemple par des pions non visibles à la troisième rondelle de guidage 214.

Ainsi qu'on le sait, dans une première phase du débattement angulaire relatif entre les rondelles de guidage 214, 214' et le moyeu 12, les organes élastiques de faible raideur, intervenant entre le voile de moyeu 13 et le moyeu 12, sont comprimés puisque les ressorts 11 sont plus raides.

Aucun mouvement relatif ne se produit alors entre le voile de moyeu 13 et les rondelles de guidage 214, 214'.

Dans cette première phase, un mouvement relatif se produit entre les portées 40, 41, sous la sollicitation de la rondelle 80.

Après rattrapage du jeu entre les dentures du voile du moyeu 13 et du moyeu 12, les organes élastiques de faible raideur restent comprimés et un mouvement relatif se produit entre le voile de moyeu 13 et les rondelles de guidage 214, 214', le voile 13 étant solidaire en rotation du moyeu 12.

Les emboutis 30 et l'anneau 132 frottent contre le voile de moyeu 13 sous la sollicitation des pattes 131.

On notera que la rondelle 80 est de forme effilée à sa périphérie externe et présente une grande portée au contact de la face latérale de la bride 141, que présente à sa périphérie externe le moyeu 12. C'est à la périphérie externe de cette bride qu'est réalisée la denture externe du moyeu 12. L'autre face de la bride est formée par la portée 41.

Les rondelles de guidage 214, 214', obtenues par emboutissage, sont donc plus large à leur périphérie interne délimité radialement extérieurement par les emboutis 30 et radialement intérieurement par la portée tronconique 40. Les emboutis 30 peuvent être reliés les uns aux autres pour former un anneau permettant de centrer la rondelle élastique 80, ici en matière plastique moulable et plus large à sa périphérie interne. La rondelle 80 est galbée et est donc inclinée axialement.

La friction d'embrayage comporte donc dans tous les cas un nombre minimum de pièces avec des frottements métal sur métal.

L'anneau 132 est en vis-à-vis des emboutis 30. On voit que la courbe caractéristique F des languettes 131 (figure 9) est particulièrement avantageuse. Cette courbe représente la charge (ou force) exercée C par les pattes 131 en fonction de leur déplacement ou déflexion D. Ainsi, une fois montées, les languettes exercent une charge sensiblement constante sur le voile de moyeu 13, ce qui permet de s'affranchir des tolérances de fabrication.

Bien entendu, les rondelles de guidage 214, 214' peuvent présenter uniquement deux rebords, qui s'étendent le long de leurs bords, radialement le plus interne et externe. C'est le cas à la figure 6.

De même, le voile de support 114, peut être fixé directement sur un volant moteur d'entraînement en rotation.

On peut éviter des frottements métal sur métal en interposant entre les surfaces métalliques, une rondelle ou des revêtements.

Les emboutis 30 peuvent être reliés ensembles de manière continue. De préférence, les emboutis 30 sont séparés les uns des autres par un mince intervalle pour pouvoir évacuer l'huile de lubrification lors de la réalisation à la presse des emboutis.

Les fenêtres du voile de moyeu 13 peuvent être remplacées par des échancrures ouvertes vers l'extérieur. Les ressorts 11 ainsi sont montés dans des logements 20 du voile de moyeu 13, ici sous forme d'ouvertures.

Grâce à l'invention, le voile de moyeu 13 est inchangé et est d'épaisseur constante.

On peut combiner les formes de réalisations.

Ainsi, à la figure 6, le voile de moyeu 13 peut être solidaire du moyeu 12, la rondelle 80 étant enlevée.

A la figure 1, on peut remplacer la rondelle de guidage 14' par la rondelle de guidage 214' et vice-versa.

Les pattes 131 de la figure 6 peuvent être remplacées par les pattes 31 de la figure 1 et vice-versa. En dotant les fenêtres 121 et les coins 221 de rebords, on peut supprimer la rondelle 214.

## Revendications

1. Dispositif amortisseur de torsion, comportant au moins deux parties coaxiales (10A, 10B) montées rotatives l'une par rapport à l'autre, dans les limites d'un débattement angulaire déterminé et à l'encontre d'organes élastiques (11) à action circonférentielle, l'une desdites parties coaxiales (11A, 11B) comportant un voile de moyeu (13), tandis que l'autre comporte un voile de support (14, 114) solidaire de deux rondelles de guidage (14, 14'), qui encadrent le voile de moyeu (13), à distance de celui-ci, et les organes élastiques (11) étant chacun logés, pour partie, dans des logements (20) ménagés dans le voile de moyeu (13), et, pour partie, dans des logements (21, 21') ménagés en correspondance dans les rondelles de guidage (14, 14'), **caractérisé en ce que** l'une des rondelles de guidage, dite deuxième rondelle de guidage (14', 214'), présente des emboutis (30), éventuellement reliés ensembles de manière continue, dirigés vers le voile de moyeu (13) et **en ce que** le voile de support (14, 114), d'une part, est implanté de l'autre côté du voile de moyeu (13) par rapport à la deuxième rondelle de guidage (14', 214'), et, d'autre part, présente, en regard des emboutis (30), des pattes (31, 131) élastiquement déformables axialement, agissant sur le voile de moyeu (13) pour solliciter les emboutis (30) en direction du voile de moyeu (13),

2. Dispositif amortisseur de torsion selon la revendication 1, **caractérisé en ce que** les pattes (31, 131) du voile de support (14, 114) sont cambrées,

3. Dispositif amortisseur de torsion selon la revendication 2, **caractérisé en ce que** les pattes (131) sont solidaires à leur périphérie interne d'un anneau (132),

4. Dispositif amortisseur de torsion selon la revendication 3, **caractérisé en ce que** les pattes (131) sont délimitées radialement par une ouverture (60) et par la ligne de cambrage (62),

5. Dispositif amortisseur de torsion selon la revendication 4, **caractérisé en ce que** le voile de support (114) présente des fenêtres (121) pour les organes élastiques (11) et **en ce que** les coins (221) inférieurs des fenêtres (121) sont élargis dans le sens circonférentiel en sorte que les pattes (131) sont délimitées latéralement par les fenêtres (121) et les coins (221),

6. Dispositif amortisseur de torsion selon la revendication 2, **caractérisé en ce que** le voile de support (114) est accolé à sa périphérie interne à l'autre rondelle de guidage (214) dite troisième rondelle de guidage,

7. Dispositif amortisseur de torsion selon la revendication 2, dans lequel les logements des rondelles de guidage (14, 14') consistent en des fenêtres, et dans lequel l'autre rondelle de guidage (14), dite première rondelle de guidage et plus mince que la deuxième rondelle de guidage et est constitué par le voile de support avec, pour chacune des fenêtres (21) de la première rondelle de guidage (14), qui est la plus mince, d'un seul tenant avec celle-ci, divers rebords (22, 23, 24) qui font saillie du côté opposé au voile de moyeu (13), à savoir, un rebord supérieur (22), qui s'étend le long du bord circonférentiel radialement le plus externe d'une telle fenêtre (21), un rebord inférieur (23), qui s'étend le long de son bord circonférentiel radialement le plus interne, et deux rebords latéraux (24), qui s'étendent chacun respectivement le long de ses deux bords radiaux, **caractérisé en ce que** ces divers rebords (22, 23, 24) sont reliés d'un seul tenant en continu les uns avec les autres tout en s'étendant conjointement en bordure d'une ouverture (25) qui laisse dégagée une partie au moins de la fenêtre (21) concernée et en ce les rebords latéraux (24) s'étendent perpendiculairement au plan général de la première rondelle de guidage (14').

8. Dispositif amortisseur de torsion suivant la revendication 7, **caractérisé en ce qu'**une partie au moins de l'un au moins des rebords latéraux (24) appartient à un embouti (27), dont le fond (28) fait saillie vers le voile de moyeu (13).

9. Dispositif amortisseur de torsion suivant la revendication 8, **caractérisé en ce que** les divers rebords (22, 23, 24) sont reliés les uns avec les autres par des rebords d'angle (32), qui sont globalement arrondis, et qui entourent chacun un épanouissement local, en forme de lobe, de la fenêtre (21) concernée.

10. Dispositif amortisseur de torsion suivant la revendication 9, **caractérisé en ce que** l'un au moins des rebords latéraux (24) comporte trois pans (33, 35), à savoir, deux pans d'extrémité (33), qui sont sensiblement coplanaires, et un pan médian (35), qui est en retrait par rapport aux pans d'extrémité (33), en étant plus éloigné que ceux-ci du rebord latéral (24) opposé.

11. Dispositif amortisseur de torsion suivant la revendication 9, **caractérisé en ce que** l'un au moins des rebords latéraux (24) présente un retour en forme de crosse (29) le long de son bord libre.

12. Dispositif amortisseur de torsion suivant la revendication 8, **caractérisé en ce que** les divers rebords (22, 23, 24) ont tous sensiblement la même hauteur.

13. Dispositif amortisseur de torsion suivant la revendication 7, **caractérisé en ce que**, le long des bords de chacune de ses fenêtres (21'), la rondelle de guidage (14') la plus épaisse, à savoir, la deuxième rondelle de guidage (14'), comporte des rebords (22', 23', 24') de même type que ceux (22, 23, 24) de la première rondelle de guidage (14) la plus mince.

14. Dispositif amortisseur de torsion suivant la revendication 8, **caractérisé en ce que** des pattes élastiquement deformables (31), venues d'un seul tenant de la première rondelle de guidage (14), portent élastiquement sur le voile de moyeu (13)

15. Dispositif amortisseur de torsion suivant la revendication 14, **caractérisés en ce que**, en vis-à-vis des pattes élastiquement deformables (31), la seconde rondelle de guidage (14') présente des emboutis (30) qui portent sur le voile de moyeu (13).

16. Dispositif amortisseur de torsion suivant la revendication 1, **caractérisé en ce que**, la deuxième rondelle de guidage (14, 114) présente à sa périphérie interne une portée tronconique (40) par laquelle elle coopère avec une portée tronconique complémentaire (41) prévue sur le moyeu.

## Patentansprüche

1. Torsionsdämpfervorrichtung, umfassend mindestens zwei koaxiale Teile (10A, 10B), die im Verhältnis zueinander drehbar innerhalb der Grenzen einer bestimmten Winkelsauslenkung und entgegen umfangsmäßig wirksamen elastischen Organen (11) gelagert sind, wobei einer der besagten koaxialen Teile (10A, 10B) eine Nabenscheibe (13) umfaßt, während der andere eine Trägerscheibe (14, 114) umfaßt, die fest mit zwei Führungsscheiben (14, 14') verbunden ist, die die Nabenscheibe (13) in einem Abstand von dieser einfassen, wobei die elastischen Organe (11) jeweils teilweise in Aufnahmen (20), die in die Nabenscheibe (13) eingearbeitet sind, und teilweise in Aufnahmen (21, 21'), die in Entsprechung dazu in die Führungsscheiben (14, 14') eingearbeitet sind, aufgenommen sind, **dadurch gekennzeichnet, daß** eine der Führungsscheiben, die als zweite Führungsscheibe (14', 214') bezeichnet wird, Vertiefungen (30) aufweist, wobei die Vertiefungen gegebenenfalls durchgehend miteinander verbunden sind, die zur Nabenscheibe (13) gerichtet sind, und daß die Trägerscheibe (14, 114) einerseits auf der anderen Seite der Nabenscheibe (13), bezogen auf die zweite Führungsscheibe (14', 214'), angeordnet ist und andererseits gegenüber den Vertiefungen (30) axial elastisch verformbare Ansätze (31, 131) aufweist, die auf die Nabenscheibe (13) einwirken, um die Vertiefungen (30) in Richtung der Nabenscheibe (13) zu beaufschlagen.

2. Torsionsdämpfervorrichtung nach Anspruch 1, **dadurch gekennzeichnet, daß** die Ansätze (31, 131) der Trägerscheibe (14, 114) gekrümmt sind.

3. Torsionsdämpfervorrichtung nach Anspruch 2, **dadurch gekennzeichnet, daß** die Ansätze (131) an ihrem inneren Umfang fest mit einem Ring (132) verbunden sind.

4. Torsionsdämpfervorrichtung nach Anspruch 3, **dadurch gekennzeichnet, daß** die Ansätze (131) radial durch eine Öffnung (60) und durch die Krümmungslinie (62) begrenzt sind.

5. Torsionsdämpfervorrichtung nach Anspruch 4, **dadurch gekennzeichnet, daß** die Trägerscheibe (114) Fenster (121) für die elastischen Organe (11) aufweist und daß die unteren Ecken (221) der Fenster (121) in Umfangsrichtung verbreitert sind, so daß die Ansätze (131) seitlich durch die Fenster (121) und die Ecken (221) begrenzt sind.

6. Torsionsdämpfervorrichtung nach Anspruch 2, **dadurch gekennzeichnet, daß** die Trägerscheibe (114) an ihrem inneren Umfang an die andere Führungsscheibe (214) angefügt ist, die als dritte Führungsscheibe bezeichnet wird.

7. Torsionsdämpfervorrichtung nach Anspruch 2, bei der die Aufnahmen der Führungsscheiben (14, 14') aus Fenstern bestehen und bei der die als erste Führungsscheibe bezeichnete und dünner als die zweite Führungsscheibe ausgeführte andere Führungsscheibe (14) durch die Trägerscheibe gebildet wird, wobei für jedes der Fenster (21) der ersten Führungsscheibe (14), die dünner ausgeführt ist, einstückig mit dieser verschiedene Randleisten (22, 23, 24) vorgesehen sind, die auf der der Nabenscheibe (13) gegenüberliegenden Seite vorstehen, und zwar eine obere Randleiste (22), die sich entlang der radial am weitesten außen liegenden Umfangskante eines solchen Fensters (21) erstreckt, eine untere Randleiste (23), die sich entlang seiner radial am weitesten innen liegenden Umfangskante erstreckt, und zwei seitliche Randleisten (24), die sich jeweils entlang seinen beiden radialen Kanten erstrecken, **dadurch gekennzeichnet, daß** diese verschiedenen Randleisten (22, 23, 24) durchgehend einstückig miteinander verbunden sind, wobei sie sich gemeinsam in der Umrandung einer Öffnung (25) erstrecken, die wenigstens einen Teil des betreffenden Fensters (21) freiläßt, und daß sich die seitlichen Randleisten (24) senkrecht zur allgemeinen Ebene der ersten Führungsscheibe (14') erstrecken.

8. Torsionsdämpfervorrichtung nach Anspruch 7, **dadurch gekennzeichnet, daß** wenigstens ein Teil wenigstens einer der seitlichen Randleisten (24) zu einer Vertiefung (27) gehört, deren Boden (28) zur Nabenscheibe (13) hin vorsteht.

9. Torsionsdämpfervorrichtung nach Anspruch 8, **dadurch gekennzeichnet, daß** die verschiedenen Randleisten (22, 23, 24) durch Winkelrandleisten (32) miteinander verbunden sind, die insgesamt abgerundet sind und die jeweils eine lappenförmige örtliche Ausstülpung des betreffenden Fensters (21) umgeben.

10. Torsionsdämpfervorrichtung nach Anspruch 9, **dadurch gekennzeichnet, daß** wenigstens eine der seitlichen Randleisten (24) drei Teilstücke (33, 35) umfaßt, und zwar zwei Endstücke (33), die in etwa koplanar verlaufen, und ein Mittelstück (35), das im Verhältnis zu den Endstücken (33) zurückversetzt ist, wobei es weiter als diese von der gegenüberliegenden seitlichen Randleiste (24) entfernt ist.

11. Torsionsdämpfervorrichtung nach Anspruch 9, **dadurch gekennzeichnet, daß** wenigstens eine der seitlichen Randleisten (24) einen krummstabförmigen Rücksprung (29) entlang ihrer freien Kante aufweist.

12. Torsionsdämpfervorrichtung nach Anspruch 8, **dadurch gekennzeichnet, daß** die verschiedenen Randleisten (22, 23, 24) alle in etwa die gleiche Höhe haben.

13. Torsionsdämpfervorrichtung nach Anspruch 7, **dadurch gekennzeichnet, daß** die dickere Führungsscheibe (14'), und zwar die zweite Führungsscheibe (14'), entlang den Kanten jedes ihrer Fenster (21') Randleisten (22', 23,', 24') der gleichen Art wie diejenigen (22, 23, 24) der dünneren ersten Führungsscheibe (14) umfaßt.

14. Torsionsdämpfervorrichtung nach Anspruch 8, **dadurch gekennzeichnet, daß** einstückig mit der ersten Führungsscheibe (14) ausgeführte elastisch verformbare Ansätze (31) elastisch auf der Nabenscheibe (13) aufliegen.

15. Torsionsdämpfervorrichtung nach Anspruch 14, **dadurch gekennzeichnet, daß** die zweite Führungsscheibe (14') gegenüber den elastisch verformbaren Ansätzen (31) Vertiefungen (30) aufweist, die auf der Nabenscheibe (13) aufliegen.

16. Torsionsdämpfervorrichtung nach Anspruch 1, **dadurch gekennzeichnet, daß** die zweite Führungsscheibe (14, 114) an ihrem inneren Umfang eine kegelstumpfartige Auflagefläche (40) aufweist, durch die sie mit einer komplementären kegelstumpfartigen Auflagefläche (41) zusammenwirkt, die an der Nabe vorgesehen ist.

## Claims

1. A torsion damping device comprising at least two coaxial parts (10A, 10B) mounted for rotation of one with respect to the other within the limits of a predetermined angular displacement and against the action of circumferentially acting resilient members (11), one of the said coaxial parts (11A, 11B) comprising a hub plate (13) while the other comprises a support plate (14, 114) fixed to two guide rings (14, 14') which flak and are spaced away from the hub plate (13), and each of the resilient members (11) being mounted partly in seatings (20) formed in the hub plate (13) and partly in corresponding seatings (21, 21') formed in the guide rings (14, 14'), **characterised in that** one of the guide rings, referred to as the second guide ring (14', 214'), includes press-formed elements (30) which may be joined together continuously and which are directed towards the hub plate (13), and **in that** the support plate (14, 114) is firstly arranged on the other side of the hub plate (13) with respect to the second guide ring (14', 214'), and secondly has, in facing relationship with the press-formed elements (30), lugs (31, 131) which are elastically deformable in the axial direction and which act on the hub plate (13) so as to urge the press-formed elements (30) towards the hub plate (13).

2. A torsion damping device according to Claim 1, **characterised in that** the lugs (31, 131) of the support plate (14, 114) are of bent form.

3. A torsion damping device according to Claim 2, **characterised in that** the lugs (131) are fixed at their inner periphery to an annular ring portion (132).

4. A torsion damping device according to Claim 3, **characterised in that** the lugs (131) are bounded radially by an opening (60) and by the bend line (61).

5. A torsion damping device according to Claim 4, **characterised in that** the support plate (114) has windows (121) for the resilient members (11), and **in that** the radially innermost corners (221) of the windows (121) are widened in the circumferential direction so that the lugs (131) are bounded laterally by the windows (121) and the corners (221).

6. A torsion damping device according to Claim 2, **characterised in that** the support plate (114) is attached at its inner periphery to the other guide ring (214), referred to as a third guide ring.

7. A torsion damping device according to Claim 2, in which the seatings in the guide rings (14, 14') consist of windows, and in which the other ring (14), referred to as a first guide ring and thinner than the second guide ring, consists of the support plate with, for each of the windows (21) in the first guide ring (14) which is the thinner of the two, and integral with the latter, various flanges (22, 223, 24) which project from the side opposite to the hub plate (13), namely an upper flange (22) which extends along the radially outermost circumferential edge of a said window (21), a lower flange (23) which extends along its radially innermost circumferential edge, and two lateral flanges (24) each of which extends respectively along its two radial edges, **characterised in that** these various flanges (22, 23, 24) are joined integrally and continuously to each other while together defining a rim of an opening (25) which leaves open at least part of the window (21) concerned, and **in that** the lateral flanges (24) extend at right angles to the general plane of the first guide ring (14').

8. A torsion damping device according to Claim 7, **characterised in that** at least part of at least one of the lateral flanges (24) is part of a press-formed element (27) the base (28) of which projects towards the hub place (13).

9. A torsion damping device according to Claim 8, **characterised in that** the various flanges (22, 23, 24) are joined to each other through angle flanges (32), which are generally rounded and each of which surrounds a lobe-shaped local enlargement of the window (21) concerned.

10. A torsion damping device according to Claim 5, **characterised in that** at least one of the lateral flanges (24) has three flat faces (33, 35), namely two end faces (33) which are substantially coplanar and a middle face (35) which is set back with respect to the end faces (33), being further away than these latter from the opposed lateral flange (24).

11. A torsion damping device according to Claim 9, **characterised in that** at least one of the lateral flanges (24) has a return (29) in the form of a crook along its free edge.

12. A torsion damping device according to Claim 8, **characterised in that** the various flanges (22, 23, 24) are all of substantially the same height.

13. A torsion damping device according to Claim 7, **characterised in that**, along the edges of each of its windows (21'), the thicker guide ring (14'), namely the second guide ring (14'), has flanges (22', 23', 24') of the same type as those (22, 23, 24) of the thinner first guide ring (14).

14. A torsion damping device according to Claim 8, **characterised in that** resiliently deformable lugs (31), formed integrally with the first guide ring (14), bear elastically on the hub plate (13).

15. A torsion damping device according to Claim 14, **characterised in that**, in facing relationship with the resiliently deformable lugs (31), the second guide ring (14') has press-formed elements (30) which bear on the hub plate (13).

16. A torsion damping device according to Claim 1, **characterised in that** the second guide ring (14, 114) has at its inner periphery a frusto-conical engagement surface (40) by means of which it co-operates with a complementary frusto-conical engagement surface (41) disposed on the hub.
